# EUROPÄISCHE PATENTSCHRIFT

(11) **EP 1 086 034 B1**
(45) Veröffentlichungstag und Bekanntmachung des Hinweises auf die Patenterteilung: **16.04.2003**
(21) Anmeldenummer: 99929172.7
(22) Anmeldetag: 10.06.1999
(51) Int. Cl.: B65G 21/22

(54) **FÖRDEREINRICHTUNG, INSBESONDERE HÄNGE-FÖRDEREINRICHTUNG, UND ZUGEHÖRIGE BAUTEILE**
CONVEYING DEVICE, ESPECIALLY A SUSPENDED CONVEYING DEVICE, AND COMPONENTS BELONGING THERETO
DISPOSITIF DE TRANSPORT, EN PARTICULIER DISPOSITIF DE TRANSPORT SUSPENDU, ET COMPOSANTS ASSOCIES

(30) Priorität: 10.06.1998 DE 19825955
(43) Veröffentlichungstag der Anmeldung: 28.03.2001
(73) Patentinhaber: WF Logistik GmbH, 86899 Landsberg (DE)
(72) Erfinder: WÖLFEL, Peter, Maximilian, D-86507 Oberottmarshausen (DE)
(74) Vertreter: Jordan, Volker, Dr.
(86) Internationale Anmeldenummer: EP9904005
(87) Internationale Veröffentlichungsnummer: WO99064329

(56) Entgegenhaltungen:
- EP-A- 0 623 530
- WO-A-95/11849
- WO-A-98/16448
- US-A- 3 581 877
- US-A- 4 325 480

## Beschreibung

Die vorliegende Erfindung betrifft eine Fördereinrichtung, insbesondere Hängefördereinrichtung, zum Transport von Fördergut längs wenigstens einer Förderstrecke, umfassend eine sich entlang der Förderstrecke erstreckende, eine Laufschienenanordnung zur Führung von Fördergutträgern aufweisende Tragprofilanordnung.

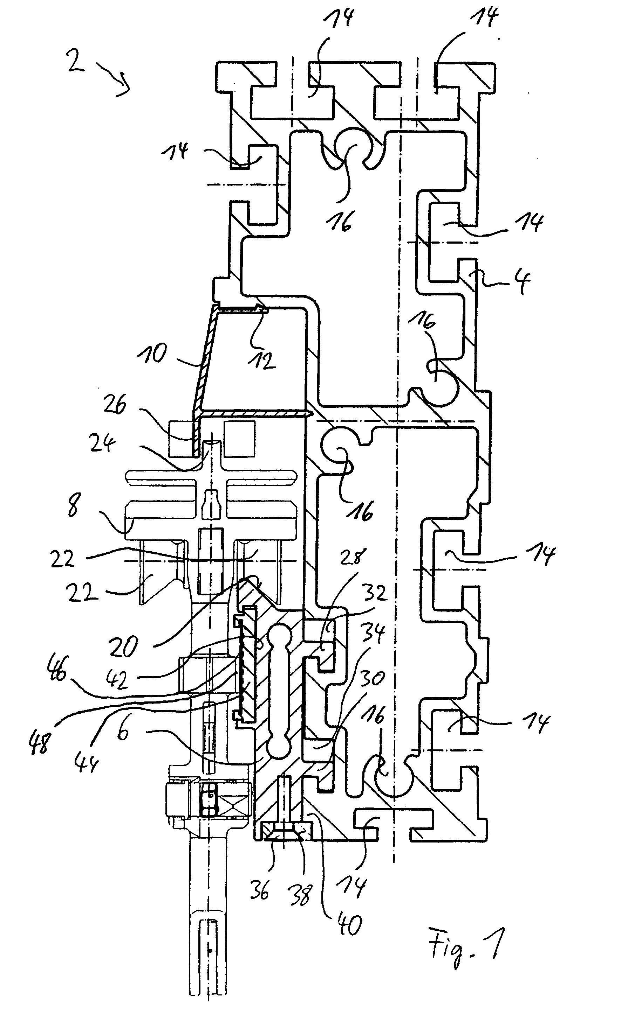

Eine derartige Fördereinrichtung ist beispielsweise aus der EP 0 582 047 A1 und der EP 0 623 497 B1 bekannt. Eine weitere derartige Fördereinrichtung und ein Montageprofilsatz zum Montieren eines Schienensystems der Hängefördereinrichtung ist aus der EP 0 623 530 A1 bekannt. In Fig. 1 der EP 0 623 530 A1 ist ein typisches Tragprofil mit einstückig integrierter Laufschiene sowie einstückig integrierter Führung für einen Reibbandantrieb gezeigt. Es handelt sich um ein stranggepreßtes Aluminiumprofil. Mit diesem Tragprofilbauteil lassen sich, insbesondere in Verbindung mit den übrigen in der EP 0 623 530 A1 gezeigten Systemkomponenten, leistungsfähige Fördereinrichtungen aufbauen. In Abweichung von den in der EP 0 623 530 A 1 erläuterten Ausführungsbeispielen wird am Ende der Offenlegungsschrift auch erwogen, an einem Tragprofil (Trägerprofil) eine gesonderte Schiene zu befestigen und nicht einstückig mit ihm auszubilden. Nähere Ausführungen hierzu sind nicht gemacht und es stellt sich die Frage, ob mit der Schiene eine eine Lauffläche aufweisenden Schiene, also eine Laufschiene gemeint ist, die beim Ausführungsbeispiel der Fig. 1 mit dem Tragprofil einteilig ausgebildet ist. Sofern man zum Schluß kommt, daß eine solche Laufschiene gemeint ist, so ist doch völlig offen, was dadurch erreicht werden soll, das Tragprofil und die Laufschiene als gesonderte Bauteile auszubilden, da sich hierdurch, wie dem Fachmann sofort klar sein wird, der Montageaufwand wesentlich erhöht.

Es hat sich aber nunmehr unerwartet gezeigt, daß der durch gesonderte Laufschienen implizierte erhöhte Montageaufwand als gegenüber durch gesonderte Laufschienen erzielbaren Vorteilen als eher weniger bedeutend in Kauf genommen werden kann, wenn für eine spezielle, zumindest bereichsweise einen Längenänderungsausgleich ermöglichende Lagerung der jeweiligen Laufschiene an der Laufschienenanordnung gesorgt ist. Für die eingangs genannte Fördereinrichtung wird hierzu erfindungsgemäß die Ausbildung en tspruched dem Kennzucken von Anspruch 1 vorgeschlagen.

Es hat sich nämlich gezeigt, daß zumindest unter speziellen Einsatzbedingungen für die Fördereinrichtung, beispielsweise in Wäschereien mit einer Umgebungstemperatur von 30° bis 40°, temperaturbedingte Längenschwankungen der Profile Probleme machen, die mit Tragprofilen mit einteilig integrierten Laufschienen nur mit hohem Aufwand beherrschbar sind, wohingegen mit einer erfindungsgemäßen Fördereinrichtung Längenschwankungen wesentlich leichter beherrschbar sind, so daß sich insgesamt ein einfacheres Handling und sogar überraschenderweise eine höhere Belastbarkeit durch Transportlasten erreicht wird. Nach der Erfindung kann die Tragprofilanordnung so montiertwerden, daß Tragprofile der Tragprofilanordnung auf Spalt bzw. mit Dehnungsfuge zwischen aufeinanderfolgenden Tragprofilen montiert werden, so daß die erwarteten Längenänderungen der Tragprofile ohne weiteres aufgenommen werden können. Mit einem Tragprofil, umfassend eine einteilig integrierte Laufschiene, wäre dies höchstens beschränkt möglich, da Spalten oder Dehnungsfugen zwischen benachbarten Tragprofilen und damit zwischen benachbarten Laufschienenabschnitten eine einwandfreie Führung von Fördergutträgern erschweren. Sofern keine Zusatzmaßnahmen getroffen werden, könnten die Fördergutträger nämlich an den Spalten bzw. Dehnungsfugen hängenbleiben, so daß eine ordnungsgemäße kontinuierliche Förderung nicht gewährleistet ist.

Nach der Erfindung kann die gesonderte Laufschiene hingegen Dehnungsfugen oder Spalten zwischen benachbarten Tragprofilen der Tragprofilanordnung überbrücken, so daß die Fördergutträger auch im Bereich der Dehnungsfugen bzw. Spalte ordnungsgemäß geführt werden.

Relative Längenänderungen zwischen Tragprofilanordnung einerseits und Laufschiene andererseits werden erfindungsgemäß durch die "schwimmende Lagerung" beherrscht, die zumindest bereichsweise einen Längenänderungsausgleichdurch Bewegung relativ zur Tragprofilanordnung zuläßt. Hierdurch wird verhindert, daß sich bei Temperaturänderungen Spannungen in der Laufschiene oder/und in dem die Laufschiene tragenden Tragprofilanordnungsabschnitt aufbauen, die, insbesondere in Zusammenhang mit hohen Förderlasten, zu einer höheren Abnutzung bzw. zu einer Verkürzung der Lebensdauer der betreffenden Bauteile führen könnten. Somit wird zumindest indirekt für eine höhere Belastbarkeit der jeweiligen Förderstrecke gesorgt.

Um einerseits absolute Längenänderungen der wenigstens einen Laufschiene und andererseits relative Längenänderungen zwischen Laufschiene und dem die Laufschiene tragenden Laufschienenanordnungabschnitt aufzunehmen, wird vorgeschlagen, daß das an der Tragprofilanordnung gelagerte Laufschienenbauteil wenigstens ein freies Ende aufweist, das zum Ausgleich von - insbesondere temperaturbedingten - Längenschwankungen des Laufschienenbauteils oder/und des wenigstens einen Tragprofils der Tragprofilanordnung relativ zur Tragprofilanordnung bewegbar ist. Eine Aufnahme von relativen Längenänderungen zwischen Laufschienenbauteil einerseits und Tragprofilanordnung andererseits wird insbesondere dann wichtig sein, wenn die Tragprofile der Tragprofilanordnung aus einem anderen Material als das Laufschienenbauteil hergestellt sind und sich die beiden Materialien hinsichtlich ihres thermischen Ausdehnungskoeffizienten unterscheiden.

In diesem Zusammenhang wird als besonders bevorzugt vorgeschlagen, daß das freie Ende im Bereich einer Kurvenfahrt-Umlenktrommel für die Fördergutträger oder einer Umsetzanordnung zum Umsetzen der Fördergutträger von einer ersten Förderstrecke zu einer zweiten Förderstrecke angeordnet ist. Man kann dann die Anordnung derart ausführen, daß das freie Ende von Fördergutträgern nicht mehr überfahren wird, oder daß die Fördergutträger beim Überfahren des freien Endes zusätzlich durch weitere Führungsmittel geführt werden, so daß sich in Positionsänderungen bzw. -verschiebungen des freien Endes längs der Tragprofilanordnung äußernde Längenschwankungen bzw. Relativlängenschwankungen im Hinblick auf die Führung der Fördergutträger unproblematisch sind.

Sicherheitshalber kann man aber im Bereich des freien Endes oder an anderer Stelle des Laufschienenbauteils vorsehen, daß das Laufschienenbauteil wenigstens einen ersten Eingriffsabschnitt aufweist, der mit einem zugeordneten ersten Gegeneingriffsabschnitt der Tragprofilanordnung in formschlüssigem Eingriff steht oder bringbar ist, wobei der erste Eingriffsabschnitt und der erste Gegeneingriffsabschnitt dafür vorgesehen sind, eine - insbesondere temperaturbedingte - Relativbewegung zwischen Laufschienenbauteil und Tragprofilanordnung zu begrenzen. Durch diese Maßnahme wird dafür gesorgt, daß das Laufschienenbauteil nur wohldefinierte Positionen relativ zur Tragprofilanordnung einnehmen kann. In diesem Zusammenhang wird auch vorgeschlagen, daß das Laufschienenbauteil an genau einer Befestigungsstelle lokal unverschiebbar an der Tragprofilanordnung gesichert oder sicherbar ist. Auch durch diese Maßnahme, die alternativ oder zusätzlich zur durch den ersten Eingriffsabschnitt und den ersten Gegeneingriffsabschnitt erreichten Positionssicherung vorgesehen sein kann, wird dafür gesorgt, daß die Laufschiene definiert an der Tragprofilanordnung positioniert ist.

Im Zusammenhang mit der lokal unverschiebbaren Sicherung hat es sich gezeigt, daß es besonders vorteilhaft ist, die Befestigungsstelle im Bereich eines Festlagers für die Tragprofilanordnung oder/und im Bereich einer Stoßstelle zwischen benachbarten Laufschienenbauteilen vorzusehen. Ist die Befestigungsstelle im Bereich eines Festlagers für die Tragprofilanordnung vorgesehen, so wird die zum Längenänderungsausgleich ggf. erforderliche Bewegung von Laufschienenabschnitten relativ zur Tragprofilanordnung so klein wie möglich gehalten. Ist die Befestigungsstelle im Bereich einer Stoßstelle zwischen benachbarten Laufschienenbauteilen vorgesehen, so kann ohne weiteres dafür gesorgt werden, daß zwei längs der Förderstrecke aufeinanderfolgende Laufschienenbauteile immer bündig aneinander anschließen, ohne daß eine Lücke entsteht, oder daß die beiden Laufschienenbauteile an der Stoßstelle übermäßig gegeneinander drücken, so daß schädliche Spannungen in der Förderstrecke aufgebaut werden könnten.

Für eine sichere, die beschriebene "schwimmende" Lagerung ermöglichende Befestigung des Laufschienenbauteils an der Tragprofilanordnung wird vorgeschlagen, daß das Laufschienenbauteil wenigstens einen zweiten Eingriffsabschnitt aufweist, der mit einem zugeordneten zweiten Gegeneingriffsabschnittder Tragprofilanordnung in formschlüssigem Eingriff steht oder bringbar ist. Vorzugsweise ermöglichen der zweite Eingriffsabschnitt und der zweite Gegeneingriffsabschnitt ein Einhängen des Laufschienenbauteils an der Tragprofilanordnung. Dabei kann das eingehängte Laufschienenbauteil mittels eines einen zugeordneten Abschnitt der Tragprofilanordnung untergreifenden Untergreifelements gegen ein Aushängen gesichert oder sicherbar sein.

In der Regel wird man die Laufschiene und deren Befestigung an der Laufschienenanordnung derart ausbilden, daß die Laufschiene vergleichsweise leicht auswechselbar ist, beispielsweise um die Fördereinrichtung für andere Fördergutträger umzubauen. In diesem Zusammenhang wird als besonders bevorzugt vorgeschlagen, daß das Laufschienenbauteil eine integrierte Führung für ein längs der Laufschiene geführtes, zur Mitnahme von Fördergutträgern dienendes Antriebsband, insbesondere Reibband, aufweist. Als Alternativlösung wird vorgeschlagen, daß das Laufschienenbauteil eine integrierte Befestigungsanordnung zum Befestigen einer gesonderten Führung für ein längs der Laufschiene geführtes, zur Mitnahme von Fördergutträgern dienendes Antriebsband, insbesondere Reibband, aufweist. Nach beiden Vorschlägen wird erreicht, daß sich auch das Antriebsband ohne weiteres auswechseln läßt, beispielsweise durch ein für die Mitnahme der neuen Fördergutträger ausgebildetes Antriebsband. Damit wird eine besonders hohe Zukunftssicherheit für die erfindungsgemäße Fördereinrichtung erreicht, da sich diese leicht an neue Förderaufgaben und Weiterentwicklungen bei Fördergutträgern anpassen läßt.

Nach einem anderen Aspekt der Erfindung wird für die eingangs genannte Fördereinrichtung bzw. für die erfindungsgemäße Fördereinrichtung vorgeschlagen, daß die Tragprofilanordnung zumindest bereichsweise längs der Förderstrecke eine Sicherungsanordnung zum Sichern der Fördergutträger gegen ein Verkippen aus einer Mitnahmestellung relativ zur Laufschienenanordnung oder/und zum Sichern der Fördergutträger gegen einen Absturz von der Laufschienenanordnung aufweist, wobei die Sicherungsanordnung wenigstens ein gegenüber der Tragprofilanordnung und der Laufschienenanordnung gesondertes Sicherungsprofilbauteil umfaßt, welches an der Tragprofilanordnung lösbar befestigt, insbesondere schwimmend gelagert ist. Nach diesem Vorschlag wird einerseits ein einfaches Umrüsten der Sicherungsanordnung im Hinblick auf andere Fördergutträger ermöglicht. Andererseits wird durch die vorgeschlagene schwimmende Lagerung erreicht, daß - wie beim erfindungsgemäßen Laufschienenbauteil - temperaturbedingte Längenänderungen des Sicherungsprofilbauteils bzw. des das Sicherungsprofilbauteil tragenden Tragprofilabschnitts keine Probleme machen und insbesondere die Sicherungsanordnung ohne Dehnungsfugen oder Spalten zwischen aufeinanderfolgenden Sicherungselementen auskommen kann, an denen Fördergutträger hängenbleiben könnten. Die vorstehend erläuterten, bevorzugten Merkmale des erfindungsgemäßen Laufschienenbauteils können entsprechend auch beim erfindungsgemäßen Sicherungsprofilbauteil vorgesehen sein; eine erneute Erläuterung der Merkmale und der durch sie erreichten Vorteile erübrigt sich.

Hinsichtlich der Befestigung des Sicherungsprofilbauteils an der Tragprofilanordnung wird allerdings als besonders bevorzugtvorgeschlagen, daß das Sicherungsprofilbauteil mit der Tragprofilanordnung verrastet oder verrastbar, ggf. einschnappbar oder aufschnappbar ist.

Ferner wird vorgeschlagen, daß als Antriebsband der Fördereinrichtung eine formschlüssig antreibbare Antriebskette vorgesehen ist, die wenigstens ein Reibelement trägt zum reibschlüssigen Mitnehmen von Fördergutträgern längs der Förderstrecke. Ein derartiges Antriebsband ist insofern vorteilhaft, daß einerseits ein formschlüssiger Antrieb des Antriebsbands möglich ist, durch den Schlupf vermieden und temperaturbedingte Längenänderungen des Antriebsbands leicht beherrschbar sind. Aufgrund des von der Antriebskette getragenen, von dieser mitgenommenen wenigstens einen Reibelements können die Fördergutträger reibschlüssig angetrieben werden, was im Hinblick auf das Ermöglichen bzw. Beherrschen von Aufstauungen von Fördergutträgern vorteilhaft ist. Die Ausbildung des Antriebsbands als Antriebskette mit wenigstens einem Reibelement ist auch interessant für Fördereinrichtungen mit einstückig in die Tragprofile integrierten Laufschienen.

Die Erfindung wird im folgenden anhand von in den Figuren gezeigten Ausführungsbeispielen näher erläutert.
- Fig. 1: zeigt einen Querschnitt durch ein erfindungsgemäßes Tragprofil mit gesondertem, schwimmend am Tragprofil gelagertem Laufschienenbauteil und aufgeschnapptem Sicherungsprofilbauteil, wobei in dünnen Linien ein auf dem Laufschienenbauteil laufender Fördergutträger angedeutet ist.
- Fig. 2: zeigt das Trägerprofil und das profilartige Laufschienenbauteil der Fig. 1 als gesonderte, nicht miteinander verbundene Bauteile.
- Fig. 3: zeigt eine seitliche Ansicht einer Tragprofilanordnung mit gesondertem, daran schwimmend gelagertem Laufschienenbauteil und hieran geführten Fördergutträgern.
- Fig. 4: zeigt eine Fig. 3 entsprechende, seitliche Ansicht mit Blick auf eine Stoßstelle zwischen zwei längs der Förderstrecke aufeinanderfolgenden Laufschienenbauteilen.
- Fig. 5: zeigt eine schematische Sicht von oben auf eine Förderstrecke mit einer Laufschienenanordnung und einem hieran schwimmend gelagerten Laufschienenbauteil (das Laufschienenbauteil der Fig. 5 steht, anders als bei der Anordnung gemäß Fig. 1, in seitlicher Querrichtung über die Tragprofilanordnung vor und ist somit von oben her sichtbar).
- Fig. 6: zeigt ein alternativ am Tragprofil anbringbares Laufschienenbauteil mit einem Antriebsband in Form einer Antriebskette.
- Fig. 7: zeigt eine weitere Variante eines Laufschienenbauteils, das anstelle des Bauteils der Fig. 2 am Tragprofil anbringbar ist und ein Antriebsband aufweist, das von einer Antriebskette mit wenigstens einem darauf angebrachten Reibelement gebildet ist.

Fig. 1 zeigt einen Querschnitt durch eine Trag- und Förderanordnung 2 einer Förderstrecke zum Transport von Fördergut mittels Fördergutträgern gemäß einem Ausführungsbeispiel einer erfindungsgemäßen Fördereinrichtung. Die Trag- und Fördereinrichtung 2 umfaßt ein Tragprofil 4, bevorzugt ein stranggepreßtes Aluminiumprofil, an dem ein als gesondertes Bauteil ausgebildete Laufschiene 6 lösbar angebracht ist. Auf der Laufschiene (vorzugsweise ebenfalls ein stranggepreßtes Aluminiumprofil) laufen Fördergutträger 8, von denen einer in Fig. 1 in dünnen Linien ungeschnitten dargestellt ist. Der Fördergutträger wird durch ein als gesondertes Bauteil ausgebildetes Sicherungsprofil 10 gegen einen Absturz von der Laufschiene 6 gesichert. Das Sicherungsprofil 10 ist ebenfalls lösbar am Tragprofil 4 angebracht, und zwar an das Tragprofil 4 aufgeschnappt oder mit diesem verrastet, wie bei 12 angedeutet ist.

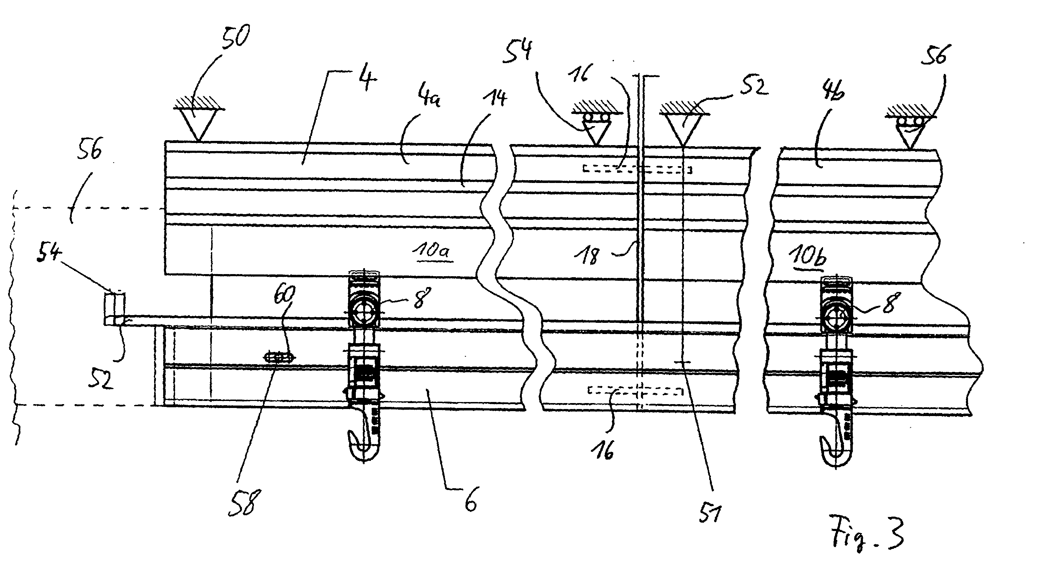

Das Tragprofil 4 weist Schraubausnehmungen 14 auf, die zur Befestigung von weiteren Systemkomponenten dienen. So sind die gegenüber der Laufschiene 6 auf der anderen Seite des Tragprofils 4 angeordneten Schraubausnehmungen 14 beispielsweise dafür bestimmt, Motorträger zu halten. Ferner weist das Tragprofil 4 Zentrierkanäle 16 auf, die Zentrierelemente, wie etwa Zentrierstäbe oder dergleichen aufnehmen können, um beispielsweise an Übergangsstellen zwischen längs der Förderstrecke aufeinanderfolgenden Tragprofilbauteilen für ein ordnungsgemäßes Fluchten der Tragprofile zu sorgen. Um Längenänderungen, die in der Regel temperaturbedingt sind, aufnehmen zu können, können die aufeinanderfolgenden Tragprofile auf Spalt montiert werden, so daß also zwischen den Tragprofilen gewissermaßen eine Dehnungsfuge vorgesehen ist. Diese Dehnungsfuge kann von den Zentrierelementen (Zentrierstäben) überbrückt werden, wobei diese einerseits in einen Zentrierkanal des einen Tragprofilbauteils und andererseits in einen entsprechenden Zentrierkanal des anderen Tragprofilbauteils eingeführt sind. Es wird hierzu auf Fig. 3 verwiesen, in der zwei Zentrierstäbe 16 angedeutet sind, die eine Dehnungsfuge 18 zwischen zwei aufeinanderfolgenden, auf Spalt montierten Tragprofilen 4a und 4b überbrücken, und dafür sorgen, daß die beiden Tragprofile in Förderrichtung miteinander fluchten. Selbstverständlich können die Zentrierstäbe 16 auch deutlich länger als in Fig. 3 gezeigt ausgebildet sein. In diesem Zusammenhang soll schon erwähnt werden, daß bei dem gezeigten Ausführungsbeispiel die Laufschiene 6 länger als ein einzelnes Tragprofilbauteil ist und die Dehnungsfuge 18 überbrückt. Auch das Sicherungsprofil könnte länger als einzelne Tragprofilbauteile ausgebildet sein, um Dehnungsfugen zwischen aufeinanderfolgenden Tragprofilbauteilen zu überbrücken. In Fig. 3 sind allerdings zwei gesonderte Sicherungsprofilbauteile 10a und 10b vorgesehen, die mit einer der Dehnungsfuge 18 entsprechenden Dehnungsfuge auf Spalt montiert sind.

Die Laufschiene 6 weist eine geneigte Lauffläche 20 auf, an der eine von zwei kegelstumpfförmigen Laufrollen 22 des Fördergutträgers 8 läuft. Der Fördergutträger weist ferner einen nach oben vorstehenden Vorsprung 24 auf, der einen sich in Längsrichtung erstreckenden Steg 26 des Sicherungsprofils 10 hintergreift, so daß für die erwähnte Absturzsicherung gesorgt ist.

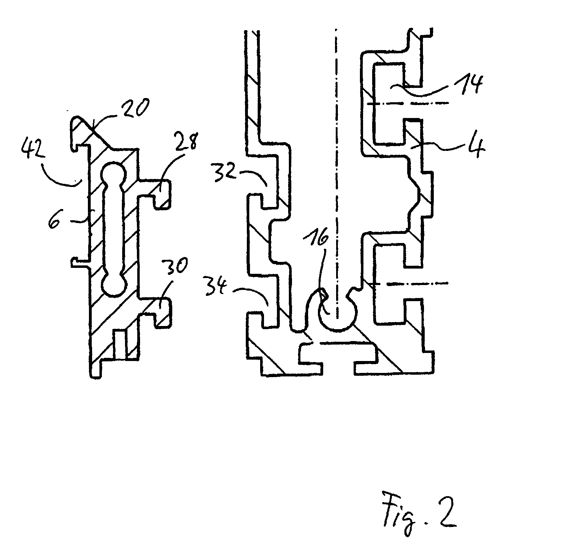

Die Laufschiene 6 weist im Querschnitt hakenförmige Vorsprünge 28 und 30 auf, die sich über die gesamte Länge der Laufschiene 6 erstrecken können oder alternativ im Vergleich zur Länge der Laufschiene 6 nur eine geringe Ausdehnung in Längsrichtung der Laufschiene aufweisen können. Im letzten Fall können längs der Laufschiene mehrere, in Längsrichtung miteinander vorzugsweise fluchtende Hakenvorsprünge 28 und 30 hintereinander angeordnet sein. Die Laufschiene 6 ist gemäß Fig. 1 am Tragprofil 4 eingehängt, und zwar mittels der Hakenvorsprünge 28, 30, die in entsprechende seitliche Einhakausnehmungen 32 und 34 des Tragprofils 4 eingreifen. In Fig. 2 sind das Tragprofil 4 und die Laufschiene 6 im nicht eingehakten Zustand gezeigt.

Es können Sicherungsmittel vorgesehen sein, die die Laufschiene 6 gegen ein Aushängen aus dem Tragprofil sichern. In Fig. 1 ist als Sicherungselement ein mittels einer Schraube 36 an der Laufschiene 6 befestigtes Untergreifelement 38 gezeigt, das einen Abschnitt 40 des Tragprofils untergreift und somit ein Aushängen der Laufschiene 6 verhindert.

Die Laufschiene 6 weist eine Aufnahmeausnehmung 42 für eine gegenüber der Laufschiene 6 gesonderte Antriebsbandführung (hier Reibbandführung) 44 auf, wobei die obere und untere Begrenzung der Aufnahmeausnehmung 42 derart ausgebildet ist, daß die zugeordnete Reibbandführung 44 in die Aufnahmeausnehmung 42 einschnappbar (und gemäß Fig. 1 schon eingeschnappt) ist. In der Reibbandführung 44 ist ein in Fig. 1 nicht im Detail erkennbares Reibband 46 geführt, an dem der Fördergutträger 8 mit einer Reibfläche 48 reibschlüssig angreift, so daß das angetriebene Reibband 46 den Fördergutträger 8 entlang der Förderstrecke mitnimmt. Alternativ könnte die Antriebsbandführung bzw. Reibbandführung 44 auch einstückig in die Laufschiene 6 integriert sein.

Es wird wieder auf die Fig. 3 Bezug genommen. In dieser Figur ist eine typische Montagesituation gezeigt. Das erste Tragprofil 4a und das zweite Tragprofil 4b sind jeweils einerseits an einem Festlager 50 bzw. 52 und andererseits an einem einen Längenänderungsausgleich ermöglichenden Gleitlager, Rollenlager oder dergleichen gelagert. Auf Grund der nur einseitig festen Lagerung und der Dehnungsfuge 18 zwischen den beiden Tragprofilbauteilen können Längenänderungen, die insbesondere temperaturbedingt auftreten können, ohne weiteres aufgenommen werden, ohne daß Spannungen in der Tragprofilanordnung resultieren.

Die Dehnungsfuge 18 bereitet hinsichtlich der Führung von Fördergutträgern 8 längs der Förderstrecke keine Probleme, da die Laufschiene 6 die Dehnungsfuge 18 überbrückt. Die Laufschiene 6 ist durch entsprechende Ausbildung der Hakenvorsprünge 28 und 30 und der zugeordneten Einhakausnehmungen 32 und 34 sowie aller weiteren, an der Lagerung bzw. Befestigung der Laufschiene 6 an der Tragprofilanordnung ggf. beteiligten Elemente derart "schwimmend" gelagert, daß ein Längenänderungsausgleich zwischen Tragprofilanordnung 4, 4a und 4b einerseits und Laufschiene 6 andererseits möglich ist. Eine derartige schwimmende Lagerung kann einfach dadurch erreicht werden, daß die Laufschiene bzw. die Laufschienen längs der Tragprofilanordnung verschiebbar sind. Dies ist auch bei der Situation gemäß Fig. 3 an sich der Fall; die Laufschiene 6 ist allerdings an genau einer Befestigungsstelle 50 lokal unverschiebbar am Tragprofil 4b gesichert. Da dies aber die einzige derartige Befestigungsstelle ist, ist ein Längenänderungsausgleich nach wie vor ohne weiteres möglich. Für diesen Längenänderungsausgleich weist die Laufschiene 6 ein freies Ende 52 auf, das, wie bei 54 angedeutet, in Längsrichtung der Laufschiene 6 positionsvariabel ist. Vorteilhafterweise ist gemäß Fig. 3 das freie Ende der Laufschiene 6 im Bereich einer Umlenkrolle 56 angeordnet, die die Funktion der Führung der Fördergutträger 8 von der Laufschiene 6 und dem Sicherungsprofil 10 übernimmt, so daß Änderungen der Position des freien Endes 52 im Hinblick auf die ordnungsgemäße Führung der Fördergutträger unproblematisch sind.

Um aber stets definierte Verhältnisse zu haben, ist die Relativbeweglichkeit zwischen Laufschiene 6 und Tragprofilanordnung 4 begrenzt. Hierzu weist das Tragprofil 4a einen Zapfenvorsprung 58 auf, der in ein sich in Längsrichtung der Laufschiene 6 erstreckendes Langloch 60 in der Laufschiene 6 eingreift. Unter normalen Verhältnissen wird der Zapfenvorsprung 58 nicht an den in Längsrichtung beabstandeten Enden des Langlochs 60 anschlagen; dies wird nur im Falle von besonderen Bedingungen, beispielsweise unerwartet hohen, zu entsprechenden Längenänderungen führenden Temperaturen der Fall sein. Die beschriebene Begrenzung der Relativbeweglichkeit zwischen Laufschiene 6 und Tragprofilanordnung 4 ist insbesondere insofern besonders vorteilhaft, als hierdurch zuverlässig vermieden werden kann, daß das im Bereich der Umlenkrolle 56 angeordnete freie Ende 52 der Laufschiene 6 in die Umlenkrolle 56 "einläuft", also mit dieser in die Quere kommt, so daß stets ein ordnungsgemäßer Betrieb der Fördereinrichtung gewährleistet ist. Es empfiehlt sich, bei einer Montage der Laufschiene an der Tragprofilanordnung den Zapfenvorsprung 58 etwa in der Mitte des Langlochs 60 anzuordnen, so daß ein Längenausgleich zu beiden Richtungen hin möglich ist. Im Falle, daß das freie Ende der Laufschiene im Bereich einer Umlenkrolle angeordnet ist (wie beim Ausführungsbeispiel der Fig. 3), ist es zweckmäßig, die Zapfenvorsprung-Langloch-Kombination in der Nähe dieses freien Endes vorzusehen.

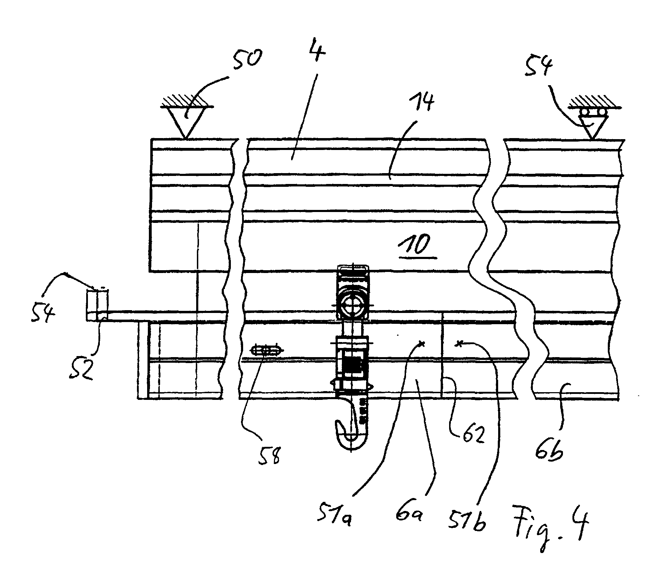

Zur Befestigungsstelle 51, an der die Laufschiene lokal unverschiebbar an der Tragprofilanordnung gesichert ist (die Befestigung kann beispielsweise durch Verschraubung erfolgen), ist noch nachzutragen, daß diese vorzugsweise im Bereich eines Festlagers vorgesehen ist. Dies ist auch bei der Situation gemäß Fig. 3 der Fall; die Befestigungsstelle 51 ist an der gleichen Längsposition wie das Festlager 52 vorgesehen. Sind allerdings entlang eines Förderstreckenabschnitts zwei gesonderte, aneinander anschließende Laufschienenbauteile 6a und 6b vorgesehen (vgl. Fig. 4), so sind die beiden Laufschienen bevorzugt jeweils im Bereich einer Stoßstelle 62 zwischen den benachbarten, aufeinanderfolgenden Laufschienenbauteilen 6a und 6b vorgesehen. Die entsprechenden Befestigungsstellen 51a für die Laufschiene 6a und 51b für die Laufschiene 6b sind in Fig. 4 angedeutet. Sofern es von der Montagesituation her ohne zu großen Aufwand möglich ist, sollte die Stoßstelle 62 zusammen mit den der Stoßstelle benachbarten Befestigungsstellen aber (in Abweichung von der in Fig. 4 gezeigten Montagesituation) möglichst im Bereich eines Festlagers vorgesehen sein.

Dadurch, daß die Befestigungsstellen 51a und 51b der beiden aneinanderstoßenden Laufschienenbauteile 6a und 6b in enger Nachbarschaft zur Stoßstelle 62 vorgesehen sind, wird stets, also auch im Falle von Längenänderungen auslösenden Temperaturänderungen, für einen ordnungsgemäßen Anschluß zwischen den beiden Laufschienenbauteilen 6a und 6b gesorgt. Die Längenänderungen der Laufschienenbauteile (absolute Längenänderungen bzw. relative Längenänderungen in Bezug auf die Tragprofilanordnung) werden dann zu den von der Stoßstelle entgegengesetzten Enden hin (freies Ende 52 der Laufschiene 6a) durch entsprechende Relativverschiebung entlang der Tragprofilanordnung aufgenommen. Dadurch wird verhindert, daß entweder die Stoßstelle 62 auf Grund eines entsprechenden Temperaturgangs zu einem Spalt aufgeweitet wird, oder daß die beiden Laufschienebauteile 6a und 6b an der Stoßstelle mit zu hohen Kräften aneinander angepreßt werden. Schädliche Spannungen innerhalb der Anordnung werden somit vermieden.

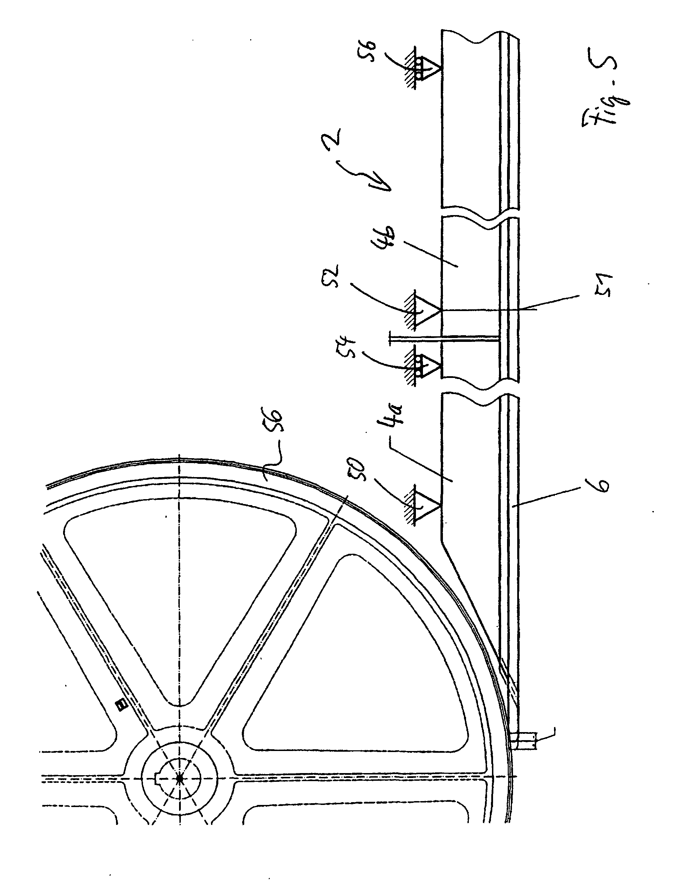

Die in Fig. 3 nur gestrichelt angedeutete Umlenkrolle 56 ist in der eine Sicht von oben zeigenden Fig. 5 in ihren Einzelheiten zu erkennen. Während die Tragprofile und Laufschienen der Fig. 3 und 4 dem Tragprofil 4 und der Laufschiene 6 der Fig. 1 entsprechen, sind bei der Trag- und Förderanordnung 2 der Fig. 5 die Laufschiene 6 und Tragprofile 4a und 4b derart in Bezug aufeinander ausgebildet, daß die Laufschiene 6 von oben her erkennbar ist, also nicht von den Tragprofilen bzw. dem Sicherungsprofil nach oben hin verdeckt ist. Ansonsten entspricht die Anordnung der Fig. 5 der Anordnung der Fig. 3, wobei noch zu ergänzen ist, daß die Lager 50, 52, 54 und 56 bei beiden Figuren nur schematisch angedeutet sind und ihre Anordnung in der Figur offen läßt, ob die Tragprofile nach unten hin, zur Seite hin oder nach oben hin gelagert sind.

Die gezeigte Ausbildung der Tragprofilanordnung einerseits und der Laufschiene bzw. der Laufschienenanordnung andererseits ermöglicht ein einfaches Austauschen der Laufschienen, wenn beispielsweise andere Fördergutträger zum Einsatz kommen sollen. Da die Antriebsbandführung an der Laufschiene bzw. den Laufschienen angeordnet ist, ist auch ein in diesem Zusammenhang ggf. erforderlicher Austausch des Antriebsbandes ohne weiteres möglich. Damit ist eine Fördereinrichtung, die aus den beschriebenen Elementen aufgebaut ist, in hohem Maße zukunftssicher.

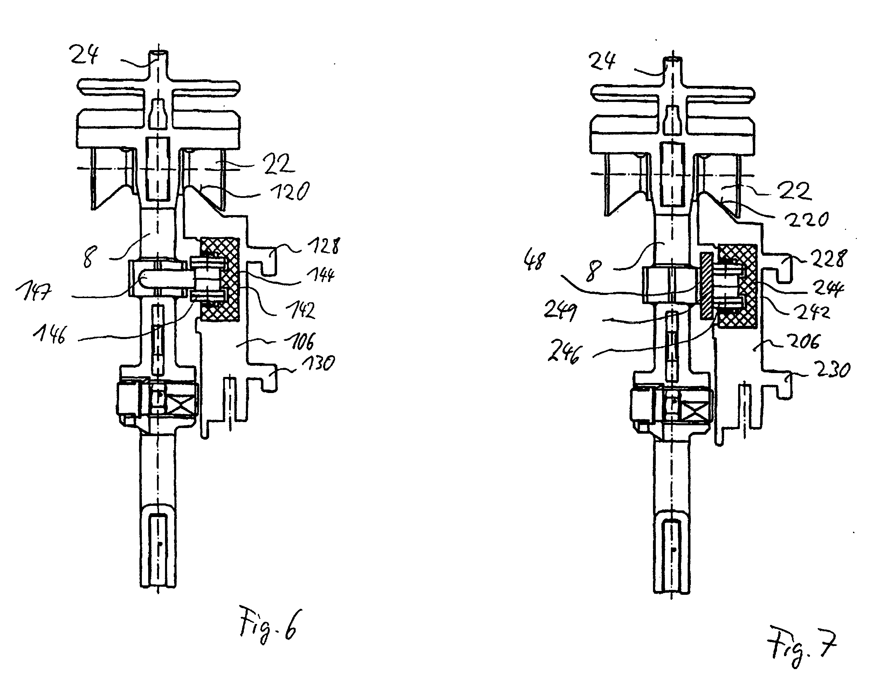

Beispielsweise könnte anstelle des Laufschienenbauteils 6 der Fig. 2 das in Fig. 6 gezeigte Laufschienenbauteil 106 an der Tragprofilanordnung angebracht werden. Die Hakenvorsprünge 128 und 130 sowie die Lauffläche 120 entsprechen den Hakenvorsprüngen 28 und 30 und der Lauffläche 20 des Bauteils 6. Anstelle der Ausnehmung 42 für die Antriebsbandführung 44 für das Reibband 46 ist allerdings beim Laufschienenbauteil 106 eine Aufnahmeausnehmung 142 für eine Antriebskettenführung 144 vorgesehen, in der eine Antriebskette 146 als Antriebsband geführt ist. Die Kette trägt fingerartige Mitnehmer 147, die formschlüssig an den Fördergutträgern 8 angreifen und diese in Förderrichtung mitnehmen. Um ein Stauen der Fördergutträger zu beherrschen bzw. überhaupt zu ermöglichen, können die Mitnahmefinger 147 umklappbar sein, beispielsweise automatisch dann umklappen, wenn eine vorgegebene Gegenkraftschwelle überschritten wird.

Ein weiteres Beispiel eines anstelle des Laufschienenbauteils 6 an der Tragprofilanordnung montierbaren Laufschienenbauteils ist in Fig. 7 gezeigt. Das Laufmaschinenbauteil 206 weist wie die Laufschienenbauteile 6 und 106 die auf die Einhakausnehmungen 32 und 34 des Tragprofilbauteils 4 abgestimmten Hakenvorsprünge 228 und 230 auf sowie die auf die Laufrollen 22 des Fördergutträgers 8 abgestimmte Lauffläche 220. Die Aufnahmeausnehmung 242 und die Antriebskettenführung 244 entsprechen der Aufnahmeausnehmung 142 und der Antriebskettenführung 144. Anstelle der Antriebskette 146 ist allerdings eine ebenfalls als Antriebsband dienende Antriebskette 246 vorgesehen, die anstelle der Mitnahmefinger 147 ein durchgehendes, sich entlang der Kette erstreckendes Reibband 249 oder eine Mehrzahl von einzelnen Reibelementen trägt, beispielsweise ein Reibelement pro Kettenglied. Der Fördergutträger 8 greift wie im Falle der Fig. 1 mit seiner Reibfläche 48 am Reibband 249 oder an einem der Reibelemente an und wird durch das Antriebsband 246, 249 reibschlüssig mitgenommen. Als Antriebsband im Sinne der vorangehenden Nomenklatur ist also die Antriebskette 246 samt des daran befestigten Reibbands 249 bzw. samt der Mehrzahl von daran befestigten Reibelementen 249 anzusehen.

Eine derartige Ausbildung des Antriebsbands 246, 249 weist den großen Vorzug auf, daß das Antriebsband einerseits formschlüssig, beispielsweise mittels entsprechender, in die Kettenglieder eingreifender Zahnräder oder dgl. antreibbar ist, so daß hier kein Schlupf auftritt und insbesondere auch durch Temperaturänderungen induzierte Änderungen der Antriebsbandlänge leicht beherrschbar sind. Trotz dieses formschlüssigen Antriebs des Antriebsbands werden andererseits die Fördergutträger 8 reibschlüssig mitgenommen, was im Hinblick auf eine einfache Beherrschung bzw. einfache Ermöglichung des Stauens von Fördergutträgern 8 entlang einer Förderstrecke trotz weiterlaufenden Antriebsbands vorteilhaft ist. Allein schon aufgrund des Vorsehens eines nur reibschlüssigen Eingriffs zwischen Fördergutträgern 8 und Antriebsband 46 bzw. 246, 249 ist die betreffende Fördereinrichtung an sich schon staufähig, da sich das Antriebsband an den Reibflächen der Fördergutträger entlangbewegen kann, wenn diese in einem Stau aufgehalten werden. Um reibungsbedingten Verschleiß zu reduzieren, kann im Falle eines Staus der reibschlüssige Eingriff zwischen den Fördergutträgern und dem Antriebsband beispielsweise mittels aus der EP 0 623 497 B1 bekannten Spreizeinrichtungen aufgehoben werden.

Die in Fig. 7 vorgeschlagene Lösung für das Antriebsband vereinigt also gewissermaßen das Beste aus zwei Welten, nämlich einerseits den formschlüssigen Antrieb des Antriebsbands und die reibschlüssige Mitnahme der Fördergutträger. Dieser Gedanke, der auch bei Tragprofilen mit einstückig integrierter Laufschiene vorteilhaft einsetzbar ist, hat isolierte (selbständige) Bedeutung auch außerhalb der anhand der Figuren 1 bis 6 erläuterten Erfindung und soll unabhängig von dieser unter Schutz gestellt werden.

Zusammenfassend betrifft die Erfindung eine Fördereinrichtung, insbesondere Hänge-Fördereinrichtung, zum Transport von Fördergut längs wenigstens einer Förderstrecke. Die Fördereinrichtung umfaßt eine sich entlang der Förderstrecke erstreckende Tragprofilanordnung mit einer Laufschienenanordnung zur Führung von Fördergutträgern. Es wird vorgeschlagen, daß wenigstens eine Laufschiene der Laufschienenanordnung als gegenüber der Tragprofilanordnung gesondertes Laufschienenbauteil ausgebildet ist, das an der Tragprofilanordnung derart schwimmend gelagert ist, daß es zumindest bereichsweise Längenänderungsausgleich durch Bewegung relativ zur Tragprofilanordnung durchführen kann.

## Patentansprüche

1. Fördereinrichtung, insbesondere Hängefördereinrichtung, zum Transport von Fördergut längs wenigstens einer Förderstrecke (2), umfassend eine sich entlang der Förderstrecke erstreckende, eine Laufschienenanordnung (6) zur Führung von Fördergutträgern (8) aufweisende Tragprofilanordnung (4, 4a, 4b), **dadurch gekennzeichnet,**
**daß** wenigstens eine Laufschiene (6) der Laufschienenanordnung als gegenüber der Tragprofilanordnung (4, 4a, 4b) gesondertes Laufschienenbauteil (6) ausgebildet ist, das sich längs Tragprofilen (4a, 4b) der Tragprofilanordnung erstreckt und an diesen derart schwimmend gelagert ist, daß es zumindest bereichs weise Längenänderungsausgleich durch Bewegung relativ zu den Tragprofilen durchführen kann,
wobei das Laufschienenbauteil (6) wenigstens eine Dehnungsfuge (18) zwischen benachbarten Tragprofilen (4a, 4b) der Tragprofilanordnung überbrückt.

2. Fördereinrichtung nach Anspruch 1, **dadurch gekennzeichnet, daß** das an der Tragprofilanordnung (4, 4a, 4b) gelagerte Laufschienenbauteil (6) wenigstens ein freies Ende (52) aufweist, das zum Ausgleich von - insbesondere temperaturbedingten - Längenschwankungen des Laufschienenbauteils (6) oder/und des wenigstens einen Tragprofils (4a, 4b) der Tragprofilanordnung relativ zur Tragprofilanordnung bewegbar ist.

3. Fördereinrichtung nach Anspruch 2, **dadurch gekennzeichnet, daß** das freie Ende im Bereich einer Kurvenfahrt-Umlenktrommel (56) für die Fördergutträger (8) oder einer Umsetzanordnung zum Umsetzen der Fördergutträger (8) von einer ersten Förderstrecke zu einer zweiten Förderstrecke angeordnet ist.

4. Fördereinrichtung nach einem der vorangehenden Ansprüche, **dadurch gekennzeichnet, daß** das Laufschienenbauteil (6) wenigstens einen ersten Eingriffsabschnitt (60) aufweist, der mit einem zugeordneten ersten Gegeneingriffsabschnitt (58) eines der Tragprofile (4a, 4b) in formschlüssigem Eingriff steht, um eine - insbesondere temperaturbedingte - Relativbewegung zwischen dem Laufschienenbauteil (6) und den Tragprofilen (4a, 4b) zu begrenzen.

5. Fördereinrichtung nach einem der vorangehenden Ansprüche, **dadurch gekennzeichnet, daß** das Laufschienenbauteil (6) an genau einer Befestigungsstelle (51) lokal unverschiebbar an einem der Tragprofile (4, 4a, 4b) gesichert ist.

6. Fördereinrichtung nach einem der vorhergehenden Ansprüche, **dadurch gekennzeichnet, daß** das Laufschienenbauteil (6) wenigstens einen zweiten Eingriffsabschnitt (28, 30) aufweist, der mit einem zugeordneten zweiten Gegeneingriffsabschnitt (32, 34) der Tragprofilanordnung (4, 4a, 4b) in formschlüssigem Eingriff steht oder bringbar ist.

7. Fördereinrichtung nach Anspruch 6, **dadurch gekennzeichnet, daß** der zweite Eingriffsabschnitt (28, 30) und der zweite Gegeneingriffsabschnitt (32, 34) ein Einhängen des Laufschienenbauteils (6) an der Tragprofilanordnung (4, 4a, 4b) ermöglichen.

8. Fördereinrichtung nach Anspruch 7, **dadurch gekennzeichnet, daß** das eingehängte Laufschienenbauteil (6) mittels eines einen zugeordneten Abschnitt (40) der Tragprofilanordnung (4, 4a, 4b) untergreifenden Untergreifelements (38) gegen ein Aushängen gesichert oder sicherbar ist.

9. Fördereinrichtung nach einem der vorangehenden Ansprüche, **dadurch gekennzeichnet, daß** das Laufschienenbauteil eine integrierte Führung für ein längs der Laufschiene geführtes, zur Mitnahme von Fördergutträgern dienendes Antriebsband, insbesondere Reibband, aufweist.

10. Fördereinrichtung nach einem der Ansprüche 1 bis 8, **dadurch gekennzeichnet, daß** das Laufschienenbauteil eine integrierte Befestigungsanordnung (42) zum Befestigen einer gesonderten Führung (44) für ein längs der Laufschiene (6) geführtes, zur Mitnahme von Fördergutträgern (8) dienendes Antriebsband, insbesondere Reibband (46), aufweist.

11. Fördereinrichtung nach einem der vorangehenden Ansprüche, **dadurch gekennzeichnet, daß** die Tragprofilanordnung (4, 4a, 4b) zumindest bereichsweise längs der Förderstrecke eine Sicherungsanordnung (10, 10a, 10b) zum Sichern der Fördergutträger (8) gegen ein Verkippen aus einer Mitnahmestellung relativ zur Laufschienenanordnung (6) oder/und zum Sichern der Fördergutträger gegen einen Absturz von der Laufschienenanordnung (6) aufweist,
wobei die Sicherungsanordnung (10, 10a, 10b) wenigstens ein gegenüber der Tragprofilanordnung (4, 4a, 4b) und der Laufschienenanordnung (6) gesondertes Sicherungsprofilbauteil (10, 10a, 10b) umfaßt, welches an der Tragprofilanordnung (4, 4a, 4b) lösbar befestigt, insbesondere schwimmend gelagert ist.

12. Fördereinrichtung nach Anspruch 11, **dadurch gekennzeichnet, daß** das Sicherungsprofilbauteil (10, 10a, 10b) wenigstens ein Merkmal des Laufschienenbauteils (6) nach einem der Ansprüche 1 bis 8 aufweist.

13. Fördereinrichtung nach Anspruch 11 oder 12, **dadurch gekennzeichnet, daß** das Sicherungsprofilbauteil (10, 10a, 10b) mit der Tragprofilanordnung (4,4a,4b) verrastet oder verrastbar ist.

14. Fördereinrichtung nach einem der vorstehenden Ansprüche, **dadurch gekennzeichnet, daß** als Antriebsband eine formschlüssig antreibbare Antriebskette (246) vorgesehen ist, die wenigstens ein Reibelement (249) trägt zum reibschlüssigen Mitnehmen von Fördergutträgern (8) längs der Förderstrecke (2).

15. Fördereinrichtung, insbesondere Hängefördereinrichtung, zumTransport von Fördergut längs wenigstens einer Förderstrecke (2), umfassend eine sich entlang der Förderstrecke erstreckende, eine Laufschienenanordnung (6) zur Führung von Fördergutträgern (8) aufweisende Tragprofilanordnung (4, 4a, 4b), **dadurch gekennzeichnet,**
**daß** die Tragprofilanordnung (4, 4a, 4b) zumindest bereichsweise längs der Förderstrecke eine Sicherungsanordnung (10, 10a, 10b) zum Sichern der Fördergutträger (8) gegen ein Verkippen aus einer Mitnahmestellung relativ zur Laufschienenanordnung (6) oder/und zum Sichern der Fördergutträger gegen einen Absturz von der Laufschienenanordnung (6) aufweist,
wobei die Sicherungsanordnung (10, 10a, 10b) wenigstens ein gegenüber der Tragprofilanordnung (4, 4a, 4b) und der Laufschienenanordnung (6) gesondertes Sichewngsprofilbauteil (10, 10a, 10b) umfaßt, welches sich längs Tragprofilen (4a, 4b) der Tragprofilanordnung (4, 4a, 4b) erstreckt und an diesen lösbar befestigt und dabei derart schwimmend gelagert ist, daß es zumindest bereichsweise Längenänderungsausgleich durch Bewegung relativ zu den Tragprofilen durchführen kann,
wobei das Sicherungsprofilbauteil (10) wenigstens eine Dehnungsfuge (18) zwischen benachbarten Tragprofilen (4a, 4b) der Tragprofilanordnung überbrückt.

16. Fördereinrichtung nach Anspruch 15, **dadurch gekennzeichnet, daß** das Sicherungsprofilbauteil (10) wenigstens einen ersten Eingriffsabschnitt aufweist, der mit einem zugeordneten ersten Gegeneingriffsabschnitt eines der Tragprofile (4a, 4b) in formschlüssigem Eingriff steht, um eine - insbesondere temperaturbedingte - Relativbewegung zwischen dem Sicherungsprofilbauteil (10) und den Tragprofilen (4a, 4b) zu begrenzen.

17. Fördereinrichtung nach Anspruch 15 oder 16, **dadurch gekennzeichnet, daß** das Sicherungsprofilbauteil (10) an genau einer Befestigungsstelle lokal unverschiebbar an einem der Tragprofile (4a, 4b) gesichert ist.

18. Fördereinrichtung nach einem der Ansprüche 15 bis 17, **dadurch gekennzeichnet, daß** das Sicherungsprofilbauteil (10, 10a, 10b) wenigstens ein weiteres Merkmal des Laufschienenbauteils (6) nach einem der Ansprüche 1 bis 8 aufweist.

19. Fördereinrichtung nach einem der Ansprüche 15 bis 18, **dadurch gekennzeichnet, daß** das Sicherungsprofilbauteil (10, 10a, 10b) mit der Tragprofilanordnung (4, 4a, 4b) verrastet oder verrastbar ist.

## Claims

1. Conveying apparatus, in particular overhead conveying apparatus, for transporting conveyable articles along at least one conveying route (2), comprising a carrying-profile arrangement (4, 4a, 4b) which extends along the conveying route and has a running-rail arrangement (6) for guiding conveyable article carriers (8), **characterised in that** at least one running rail (6) of the running-rail arrangement is designed as a running-rail component (6) which is separate from the carrying-profile arrangement (4, 4a, 4b), extends along carrying profiles (4a, 4b) of the carrying-profile arrangement and is mounted in a floating manner on said profiles such that, at least in certain regions, it can compensate for a change in length by moving relative to the carrying profiles, the running-rail component (6) bridging at least one expansion joint (18) between adjacent carrying profiles (4a, 4b) of the carrying profile arrangement.

2. Conveying apparatus according to claim 1, **characterised in that** the running-rail component (6), which is mounted on the carrying-profile arrangement (4, 4a, 4b), has at least one free end (52) which can be moved relative to the carrying-profile arrangement in order to compensate for - in particular temperature-induced - fluctuations in length of the running-rail component (6) and/or of the at least one carrying profile (4a, 4b) of the carrying-profile arrangement.

3. Conveying apparatus according to claim 2, **characterised in that** the free end is arranged in the region of a corner-turning deflecting drum (56) for the conveyable-article carriers (8) or of a transfer arrangement for transferring the conveyable-article carriers (8) from a first conveying route to a second conveying route.

4. Conveying apparatus according to any of the preceding claims, **characterised in that** the running-rail component (6) has at least one first engagement portion (60), which is in form-fitting engagement with an associated first mating engagement portion (58) of one of the carrying profiles (4a, 4b) in order to limit an - in particular temperature-induced - relative movement between the running-rail component (6) and the carrying profiles (4a, 4b).

5. Conveying apparatus according to any of the preceding claims, **characterised in that** the running-rail component (6) is secured on one of the carrying profiles (4, 4a, 4b) in a locally non-displaceable manner at precisely one fastening location (51).

6. Conveying apparatus according to any of the preceding claims, **characterised in that** the running-rail component (6) has at least one second engagement portion (28, 30), which is in, or can be brought into, form-fitting engagement with an associated second mating engagement portion (32, 34) of the carrying-profile arrangement (4, 4a, 4b).

7. Conveying apparatus according to claim 6, **characterised in that** the second engagement portion (28, 30) and the second mating engagement portion (32, 34) make it possible for the running-rail component (6) to be fitted into the carrying-profile arrangement (4, 4a, 4b).

8. Conveying apparatus according to claim 7, **characterised in that** the fitted-in running-rail component (6) is, or can be, secured against disengagement by means of a bottom-engagement element (38) which engages beneath an associated portion (40) of the carrying-profile arrangement (4, 4a, 4b).

9. Conveying arrangement according to any of the preceding claims, **characterised in that** the running-rail component has an integrated guide for a drive belt, in particular frictional belt, which is guided along the running rail and serves for carrying along conveyable-article carriers.

10. Conveying apparatus according to any of claims 1 to 8, **characterised in that** the running-rail component has an integrated fastening arrangement (42) for fastening a separate guide (44) for a drive belt, in particular frictional belt (46), which is guided along the running rail (6) and serves for carrying along conveyable-article carriers (8).

11. Conveying apparatus according to any of the preceding claims, **characterised in that**, at least in certain regions along the conveying route, the carrying-profile arrangement (4, 4a, 4b) has a securing arrangement (10, 10a, 10b) for securing the conveyable-article carriers (8) against tilting out of a carry along position relative to the running-rail arrangement (6) and/or for securing the conveyable-article carriers against falling off the running-rail arrangement (6), the securing arrangement (10, 10a, 10b) comprising at least one securing-profile component (10, 10a, 10b) which is separate from the carrying-profile arrangement (4, 4a, 4b) and the running-rail arrangement (6) and is fastened releasably, in particular is mounted in a floating manner, on the carrying-profile arrangement (4, 4a, 4b).

12. Conveying apparatus according to claim 11, **characterised in that** the securing-profile component (10, 10a, 10b) has at least one feature of the running rail component (6) according to any of claims 1 to 8.

13. Conveying arrangement according to claim 11 or 12, **characterised in that** the securing profile component (10, 10a, 10b) is, or can be, latched to the carrying-profile arrangement (4, 4a, 4b).

14. Conveying apparatus according to any of the preceding claims, **characterised in that** provided as drive belt is a drive chain (246) which can be driven with form fit and carries at least one frictional element (249) for carrying along conveyable-article carriers (8) along the conveying route (2) with a friction fit.

15. Conveying apparatus, in particular overhead conveying apparatus, for transporting conveyable articles along at least one conveying route (2), comprising a carrying-profile arrangement (4, 4a, 4b) which extends along the conveying route and has a running-rail arrangement (6) for guiding conveyable article carriers (8), **characterised in that** the carrying-profile arrangement (4, 4a, 4b) has, at least in certain regions along the conveying route, a securing arrangement (10, 10a, 10b) for securing the conveying-article carriers (8) against tilting out of a carry-along position relative to the running-rail arrangement (6) and/or for securing the conveyable-article carriers against falling off the running-rail arrangement (6), the securing arrangement (10, 10a, 10b) comprising at least one securing-profile component (10, 10a, 10b) which is separate from the carrying-profile arrangement (4, 4a, 4b) and the running-rail arrangement (6), extends along carrying profiles (4a, 4b) of the carrying-profile arrangement (4, 4a, 4b) and is fastened releasably on said carrying profiles and, besides, is mounted in a floating manner such that, at least in certain regions, it can compensate for a change in length by moving relative to the carrying profiles, the securing-profile component (10) bridging at least one expansion joint (18) between adjacent carrying profiles (4a, 4b) of the carrying-profile arrangement.

16. Conveying apparatus according to claim 15, **characterised in that** the securing-profile component (10) has at least one first engagement portion, which is in form-fitting engagement with an associated first mating engagement portion of one of the carrying profiles (4a, 4b) in order to limit an - in particular temperature-induced - relative movement between the securing-profile component (10) and the carrying profiles (4a, 4b).

17. The conveying apparatus according to claim 15 or 16, **characterised in that** the securing-profile component (10) is secured on one of the carrying profiles (4a, 4b) in a locally non-displaceable manner at precisely one fastening location.

18. The conveying apparatus according to one of claims 15 to 17, **characterised in that** the securing profile component (10, 10a, 10b) has at least one further feature of the running-rail component (6) according to one of claims 1 to 8.

19. Conveying apparatus according to any of claims 15 to 18, **characterised in that** the securing profile component (10, 10a, 10b) is, or can be, latched to the carrying-profile arrangement (4, 4a, 4b).

## Revendications

1. Dispositif de transport, notamment de transport suspendu pour transporter des matières à transporter le long d'au moins un parcours de transport (2) comprenant un dispositif de profils porteurs (4, 4a, 4b) présentant un dispositif de chemin de roulement (6) pour guider les supports des matières à transporter (8), s'étendant le long d'un parcours de transport **caractérisé en ce que**
au moins un chemin de roulement (6) du dispositif de chemin de roulement est réalisé sous forme d'un composant de chemin de roulement séparé (6) par rapport au dispositif de profils porteurs (4, 4a, 4b) qui s'étend le long des profils porteurs (4a, 4b) du dispositif de profils porteurs et y est logé de façon flottante pour qu'il puisse effectuer au moins par endroits une compensation des variations en longueur grâce à un mouvement par rapport . aux profils porteurs,
dans lequel le composant de chemin de roulement (6) forme un pont sur au moins un joint de dilatation (18) entre deux profils porteurs adjacents (4a, 4b) du dispositif de profils porteurs.

2. Dispositif de transport selon la revendication 1, **caractérisé en ce que** le composant de chemin de roulement (6) logé dans le dispositif de transport (4, 4a, 4b) présente au moins une extrémité libre (52), qui est mobile par rapport au dispositif de profils porteurs pour compenser des variations en longueur, notamment dues à la température, du composant de chemin de roulement (6) et/ou au moins un des profils porteurs (4a, 4b) du dispositif de profils porteurs .

3. Dispositif de transport selon la revendication 2, **caractérisé en ce que** l'extrémité libre est disposée au voisinage d'une poulie de renvoi pour l'avancement en courbe (56) pour les supports des matières à transporter (8) ou d'un dispositif de déplacement pour déplacer les supports des matières à transporter (8) d'un premier parcours de transport à un deuxième parcours de transport.

4. Dispositif de transport selon l'une des revendications précédentes, **caractérisé en ce que** le composant de chemin de roulement (6) présente au moins une première portion d'engrènement (60), qui engrène avec une première portion d'engrènement complémentaire associée (58) à un des profils porteurs (4a, 4b) pour limiter un mouvement relatif, notamment dû à la température, entre le composant de chemin de roulement (6) et les profils porteurs (4a, 4b).

5. Dispositif de transport selon l'une des revendications précédentes, **caractérisé en ce que** le composant de chemin de roulement (6) est fixé exactement à un endroit de fixation (51) de façon localement non-déplaçable à un des profils porteurs (4, 4a, 4b).

6. Dispositif de transport selon l'une des revendications précédentes, **caractérisé en ce que** le composant de chemin de roulement (6) présente au moins une deuxième portion d'engrènement (28, 30) qui engrène ou peut engrener par complémentarité de formes avec une deuxième portion d'engrènement associée (32, 34) au dispositif de profils porteurs (4, 4a, 4b).

7. Dispositif de transport selon la revendication 6, **caractérisé en ce que** la deuxième portion d'engrènement (28, 30) et la deuxième portion d'engrènement (32, 34) permettent une suspension du composant de chemin de roulement (6) au dispositif de profils porteurs (4, 4a, 4b).

8. Dispositif de transport selon la revendication 7, **caractérisé en ce que** le composant de chemin de roulement suspendu (6) est sécurisé ou peut être sécurisé contre un décrochage au moyen d'un élément de prise par en dessous (38) entrant en prise par en dessous avec une portion associée (40) du dispositif de profils porteurs (4, 4a, 4b).

9. Dispositif de transport selon l'une des revendications précédentes, **caractérisé en ce que** le composant de chemin de roulement présente un guidage intégré pour une bande d'entraînement, notamment une bande de frottement guidée le long du chemin de roulement servant à l'entraînement de supports de matières à transporter.

10. Dispositif de transport selon l'une des revendications 1 à 8, **caractérisé en ce que** le composant de chemin de roulement présente un dispositif de fixation (42) pour la fixation d'un guidage séparé (44) pour une bande d'entraînement, notamment une bande de frottement (46) guidée le long du chemin de roulement (6) servant à l'entraînement de supports de matières à transporter (8).

11. Dispositif selon l'une des revendications précédentes, **caractérisé en ce que** le dispositif de profils porteurs (4, 4a, 4b) présente un dispositif de blocage (10, 10a, 10b) au moins sur une portion du parcours de transport pour la sécurisation des supports des matières à transporter (8) contre un basculement d'une position d'entraînement par rapport au dispositif de chemin de roulement (6) et/ou pour une sécurisation des supports des matières à transporter contre une chute du dispositif de chemin de roulement (6),
dans lequel le dispositif de blocage (10, 10a, 10b) comprend au moins un composant de profil de blocage (10, 10a, 10b) séparé du dispositif de profils porteurs (4, 4a, 4b) et du dispositif de chemin de roulement (6), qui est fixé de façon amovible, notamment logé de façon flottante par rapport au dispositif de profils porteurs (4, 4a, 4b).

12. Dispositif de transport selon la revendication 11, **caractérisé en ce que** le composant de profil de blocage (10, 10a, 10b) présente au moins une caractéristique du composant de chemin de roulement (6) selon l'une quelconque des revendications 1 à 8.

13. Dispositif de transport selon la revendication 11 ou 12, **caractérisé en ce que** le composant de profil de blocage (10, 10a, 10b) est enclenché ou peut être enclenché dans le dispositif de profils porteurs (4, 4a, 4b).

14. Dispositif de transport selon l'une des revendications précédentes, **caractérisé en ce qu'**une chaîne d'entraînement (246) solidaire pouvant être entraînée est prévue en tant que bande d'entraînement, qui porte au moins un élément de frottement (249) pour l'entraînement par frottement des supports des matières à transporter (8) le long du parcours de transport (2).

15. Dispositif de transport, notamment de transport suspendu pour transporter des matières à transporter le long d'au moins un parcours de transport (2), comprenant un dispositif de profils porteurs (4, 4a, 4b) présentant un dispositif de chemin de roulement (6) pour guider les supports des matières à transporter (8), s'étendant le long du parcours de transport **caractérisé en ce que**
le dispositif de profils porteurs (4, 4a, 4b) présente un dispositif de blocage (10, 10a, 10b) au moins sur une portion du parcours de transport pour la sécurisation des supports des matières à transporter (8) contre un basculement d'une position d'entraînement par rapport au dispositif de chemin de roulement (6) et/ou pour une sécurisation des supports des matières à transporter contre une chute du dispositif de chemin de roulement (6),
dans lequel le dispositif de blocage (10, 10a, 10b) comprend au moins un composant de profil de blocage (10, 10a, 10b) séparé par rapport au dispositif de profils porteurs (4, 4a, 4b) et au dispositif de chemin de roulement (6), qui s'étend le long de profils porteurs (4a, 4b) du dispositif de profils porteurs (4, 4a, 4b) et y est fixé de façon amovible et y est logé manière flottante de telle sorte qu'il peut effectuer une compensation des variations en longueur grâce à un mouvement par rapport aux profils porteurs au moins par endroits,
dans lequel le composant de profil de blocage (10) forme un pont sur au moins un joint de dilatation (18) entre des profils porteurs adjacents (4a, 4b) du dispositif de profils porteurs.

16. Dispositif de transport selon la revendication 15, **caractérisé en ce que** le composant de profil de blocage (10) présente au moins une première portion d'engrènement qui engrène par complémentarité de formes avec une première portion d'engrènement associée à l'un des profils porteurs (4a, 4b) pour limiter un mouvement relatif, notamment dû à la température, entre le composant de profil de blocage (10) et les profils porteurs (4a, 4b).

17. Dispositif de transport selon la revendication 15 ou 16, **caractérisé en ce que** le composant de profil de blocage (10) est bloqué exactement à un endroit de fixation de façon localement non-déplaçable à un des profils porteurs. (4a, 4b).

18. Dispositif de transport selon l'une des revendications 15 à 17, **caractérisé en ce que** le composant de profil de blocage (10, 10a, 10b) présente au moins une autre caractéristique du composant de chemin de roulement (6) selon l'une des revendications 1 à 8.

19. Dispositif de transport selon l'une des revendications 15 à 18, **caractérisé en ce que** le composant de profil de blocage (10, 10a, 10b) est enclenché ou peut être enclenché avec le dispositif de profils porteurs (4, 4a, 4b).
